# EUROPÄISCHE PATENTANMELDUNG

(11) **EP 2 067 915 A2**
(43) Veröffentlichungstag der Anmeldung: **10.06.2009**
(21) Anmeldenummer: 08001761.9
(22) Anmeldetag: 31.01.2008
(51) Int. Cl.: E04H 12/10, F03D 11/04, E02B 17/00

(54) **Gitterstruktur eines Offshore-Bauwerks, insbesondere einer Offshore-Windenergieanlage**

(30) Priorität: 04.12.2007 EP 07023455
(71) Anmelder: WeserWind GmbH, 27572 Bremerhaven (DE)
(72) Erfinder: Kassen, Dirk, 49124 Georgsmarienhütte (DE)
(74) Vertreter: Möller, Friedrich

(57) **Zusammenfassung**

Für Offshore-Bauwerke verwendete Gitterstrukturen bestehen aus so miteinander verbundenen Säulen und Streben. Mit Gründungspfählen (10) werden die Gitterstrukturen auf dem Meeresgrund verankert. Die Verbindung zwischen den Gründungspfählen (10) und der Gitterstruktur erfolgt bisher mit Pfahlhülsen, die in aufwendiger Weise an der Gründungsstruktur befestigt werden müssen.

Die Erfindung sieht es vor, Fußknotenteile (20) der Gitterstruktur direkt auf die Gründungspfähle (10) aufzusetzen. Die Fußknotenteile (20) weisen dazu Aufnahmen (23) für die Gründungspfähle (10) auf, in die obere Enden der Gründungspfähle (10) hineinsteckbar und befestigbar sind. Damit entfallen Pfahlhülsen und ihre aufwendige Befestigung an der Gitterstruktur.

## Beschreibung

Die Erfindung betrifft eine Gitterstruktur eines Offshore-Bauwerks, insbesondere einer Offshore-Windenergieanlage, gemäß dem Oberbegriff des Anspruchs 1.

Gitterstrukturen der hier angesprochenen Art werden für Offshore-Bauwerke verwendet. Bevorzugt dienen solche Gitterstrukturen als Gründungsstrukturen für Offshore-Bauwerke. Diese Gründungsstrukturen befinden sich mindestens größtenteils unter Wasser und stellen quasi das Fundament der Offshore-Bauwerke, insbesondere Offshore-Windenergieanlagen, dar.

Die Gitterstrukturen sind als dreidimensionale Rahmentragwerke ausgebildet mit aufrechten bzw. leicht geneigten Säulen in den Kanten- bzw. Eckbereichen und vorzugsweise diagonalgerichteten Streben zu Versteifungszwecken. Die Säulen und Streben werden üblicherweise aus Rohren gebildet, können aber auch aus Stangen bestehen. Die Rohren oder Stangen der Säulen und Streben sind an Knotenpunkten miteinander verbunden, vorzugsweise verschweißt.

Die Verankerung der Gitterstruktur am Meeresboden erfolgt üblicherweise mit Hilfe von Gründungspfählen, die einerseits im Meeresboden eingerammt und andererseits durch an der Gitterstruktur angebrachte Pfahlhülsen geführt und dort ebenfalls befestigt werden. Die Herstellung und Montage der Pfahlhülsen an der Gitterstruktur ist recht aufwendig.

Aufgabe der Erfindung ist es daher, eine Gitterstruktur für Offshore-Bauwerke zu schaffen, die einfach und zuverlässig auf dem Meeresgrund an Gründungspfählen zu verankern ist.

Eine Gitterstruktur zur Lösung dieser Aufgabe weist die Merkmale des Anspruchs 1 auf. Demnach sind die Knotenpunkte am unteren Ende der Säulen als Fußknotenteile ausgebildet. Bei den Fußknotenteilen kann es sich um vorgefertigte Standardteile handeln. Durch Verwendung solcher Fußknotenteilen wird die Herstellung der Gitterstruktur und die Verankerung derselben an den Gründungspfählen erleichtert, insbesondere werden separate Pfahlhülsen überflüssig.

Bevorzugt sind mindestens die Fußknotenteile aus einem schweißbaren Metall gegossen, bestehen nämlich insbesondere aus Stahlguss. Die Verwendung eines schweißbaren Materials zum Gießen der Fußknotenteile ermöglicht das Anschweißen von Rohren und/oder Stangen zur Bildung der Säulen und Streben an die gegossenen Fußknotenteile. Das Gießen ermöglicht die einstückige Herstellung der Fußknotenteile als Standard-Gußknotenteile.

Die Fußknotenteile sind vorzugsweise hohl ausgebildet und weisen zumindest teilweise einen Querschnitt auf, der mit dem Querschnitt der anzuschweißenden Rohre korrespondiert.

Die Fußknotenteile weisen eine bevorzugt eine unten offene Aufnahme, einen sogenannten "Pile Cup", für einen oberen Endbereich eines jeweiligen Gründungspfahls auf. Die jeweilige Aufnahme ist insbesondere in dem betreffenden Fußknotenteil angeordnet bzw. untergebracht. Somit kann die Gitterstruktur mit Hilfe der Fußknotenteile direkt auf die Gründungspfähle aufgesetzt werden, so dass keine weiteren Befestigungsmittel notwendig sind.

Gemäß einer bevorzugten weiteren Ausgestaltung der Erfindung ist vorgesehen, dass die Aufnahmen der Fußknotenteile, insbesondere ihren unteren Öffnung, einen größeren Querschnitt als der obere Endbereich des in die jeweilige Aufnahme einzusetzenden Gründungspfahls aufweist. Dadurch können Positionierungsungenauigkeiten der in den Meeresboden eingerammten Gründungspfähle gegenüber dem Raster der Knotenteile am unteren Ende der Gründungsstruktur ausgeglichen werden.

Eine weitere Ausgestaltung der Erfindung sieht es vor, dass die Fußknotenteile in den Bereichen der Aufnahme einen größeren Querschnitt aufweisen als im Übrigen. Dadurch kann der Querschnitt des Fußknotenteils einem im Durchmesser größeren Gründungspfahl angepasst werden, ohne den Rest des Fußknotenteils unnötig groß auszubilden. Bei einer bevorzugten Ausgestaltung der Erfindung ist die Aufnahme in einem unten am Fußknotenteil einstückig angegossenen Klöpperboden am unteren Endbereich des jeweiligen Fußknotenteils angeordnet. Der großflächige Klöpperboden schafft Platz für ausreichend große Aufnahmen im unteren Endbereich des jeweiligen Fußknotenteils. Außerdem ermöglicht der größere Klöpperboden eine günstige Lastverteilung.

Alternativ kann mit dem unteren Ende des jeweiligen Fußknotenteils aber auch ein kurzes Rohrstück verbunden werden, das die Aufnahme für einen Gründungspfahl aufweist, insbesondere beinhaltet. Dadurch lassen sich Höhenunterschiede des Meeresbodens durch Verwendung unterschiedlich langer Rohrstücke ausgleichen. Auch können die Rohrstücke größere Durchmesser als die unteren Enden der Fußknotenteile aufweisen.

Im Bereich der Aufnahme weist das Fußknotenteil insbesondere mindestens eine Öffnung auf, die vorzugsweise als Ventil ausgebildet ist. Durch diese Öffnung lässt sich ein fließfähiges Verbindungsmittel, ein sogenanntes Grout-Material, das in der Lage ist, vorzugsweise unter Wasser auszuhärten und eine feste Masse zu bilden, in die Aufnahme des Fußknotenteils einbringen. Eine zweite Öffnung kann beispielsweise zur Ableitung von in der Aufnahme befindlichen Flüssigkeiten oder Gasen dienen. Auf diese Weise lassen sich die Fußknotenteile der eine Gründungsstruktur bildenden Gitterstruktur mit den aus dem Meeresboden mit einem oberen Endbereich herausragenden, freiliegenden Endbereich der Gründungspfähle an Ort und Stelle, also unter Wasser, fest und dauerhaft verbinden.

Bevorzugte Ausführungsbeispiele der Erfindung werden nachfolgend anhand der Zeichnung näher beschrieben. In der Zeichnung zeigen:

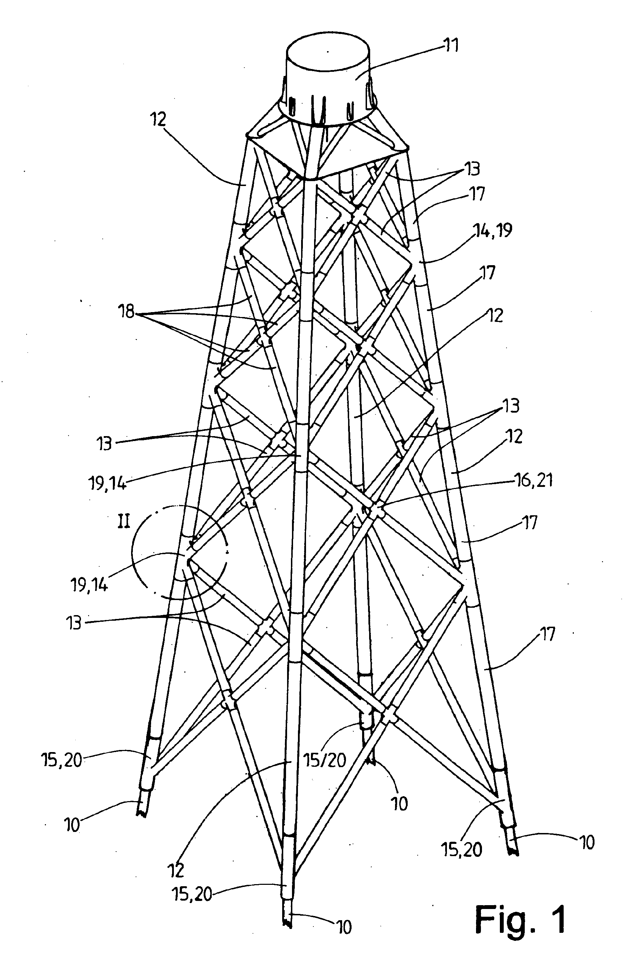

- Fig. 1: eine perspektivische Ansicht einer Gitterstruktur mit einem Fußknotenteil gemäß der Fig. 2,
- Fig. 2: ein Längsschnitt durch ein erstes Ausführungsbeispiel eines Fußknotenteils,
- Fig. 3: eine Seitenansicht eines zweiten Ausführungsbeispiels eines Fußknotenteils, und
- Fig. 4: eine Seitenansicht eines dritten Ausführungsbeispiels eines Fußknotenteils.

Die in den Figuren gezeigte Gitterstruktur ist beispielsweise vorgesehen als Gründungsstruktur einer Offshore-Windenergieanlage. Die als Fundament für die Offshore-Windenergieanlage dienende Gitterstruktur wird auf den Meeresboden aufgesetzt und dort mit Gründungspfählen 10 verankert. Die Gitterstruktur ist größtenteils im Wasser angeordnet. Sie ragt nur mit einem oberen Ende, nämlich mit einem Übergangsstück 11, aus dem Wasser heraus. Mit dem Übergangsstück 11 wird der Fuß eines Turms einer Windenergieanlage verbunden.

Die hier gezeigte Gitterstruktur ist als dreidimensionales Rahmentragwerk ausgebildet. Dazu verfügt die Gitterstruktur über hochragende Säulen 12 und überwiegend diagonalgerichtete Streben 13. Die Streben 13 sind mit den Säulen 12 an inneren Knotenpunkten 14 und unteren Fußknotenpunkten 15 verbunden. Die in den Figuren gezeigte Gitterstruktur verfügt über vier Säulen 12 an den vier Ecken bzw. aufragenden Kanten der dreidimensionalen Gitterstruktur. Bei der gezeigten Gitterstruktur sind die Säulen 12 leicht gegenüber der Vertikalen geneigt, laufen nämlich in Richtung zum Übergangsstück 11 am oberen Ende der Gitterstruktur etwa konvergierend, so dass sich der Abstand der Säulen 12 ausgehend von den Fußknotenpunkten 15 an den unteren Enden der Säulen 12 zum oberen Übergangsstück 11 hin kontinuierlich verringert. Die Säulen 12 laufen aber am oberen Ende der Gitterstruktur nicht zusammen, so dass sie unterhalb des Übergangsstücks 11 auch noch beabstandet sind. In jeder von zwei benachbarten Säulen 12 aufgespannten trapezförmigen Ebene sind die Streben 13 angeordnet. Im gezeigten Ausführungsbeispiel verlaufen die Streben 13 diagonal zwischen zwei übereinanderliegenden Knotenpunkten 14, 15 einerseits und zweier benachbarter Säulen 12 andererseits. Dadurch kreuzen sich die diagonalen Streben 13 in Knotenpunkten 16. Bei der hier gezeigten Gitterstruktur sind vier Etagen sich kreuzender Streben 13 und Knotenpunkte 14 übereinander angeordnet.

Die Erfindung ist nicht auf Gitterstrukturen mit vier Säulen 12 beschränkt. Die Erfindung eignet sich auch für Gitterstrukturen mit nur drei Säulen 12 oder mehr als vier Säulen 12. Ebenso können die Säulen 12 senkrecht verlaufen oder unterschiedlich geneigt sein. Schließlich können die Streben 13 in weniger oder mehr als vier übereinanderliegenden Etagen angeordnet sein und auch andere Verläufe aufweisen. Beispielsweise müssen sich nicht zwei Streben 13 an einem Knotenpunkt 16 kreuzen.

Die Säulen 12 und Streben 13 sind aus Rohren 17, 18 entsprechender Längen gebildet. Gegebenenfalls können die Säulen 12 und/oder Streben 13 auch aus massiven Stangen mit beliebigen Querschnitten gebildet sein. Die Rohre 17 der Säulen 12 weisen einen größeren Durchmesser auf als die Rohre 18 der Streben 13. Im Querschnitt sind die Rohre 17 und 18 der Säulen 12 und Streben rund ausgebildet. Die Säulen 12 und/oder Streben 13 können aber auch über andere Querschnitte, beispielsweise elliptische oder ovale Querschnitte, verfügen.

Die Enden der Streben 13 sind nicht unmittelbar mit den Säulen 12 verschweißt, sondern durch im Bereich der Knotenpunkte 14 und vorzugsweise auch 16 vorgesehene Knotenteile 19 und 21 verbunden. Am unteren Ende der Gitterstruktur sind die Säulen 12 und Streben 13 in den Fußknotenpunkten 15 durch Fußknotenteile 20 verbunden. Dazu verfügen die Fußknotenteile 20 über eine ψ-artige Gestalt, können also auch als ψ-Knoten bezeichnet werden. Abweichend vom gezeigten Ausführungsbeispiel können die Streben 13 an ihren Kreuzungsstellen, nämlich den Knotenpunkten 16, direkt miteinander verschweißt sein, insbesondere wenn die Streben 13 sich rechtwinklig kreuzen.

Die Fußknotenteile 20 an den unteren Enden der Säulen 12 dienen zur Verbindung der Gitterstruktur mit den Gründungspfählen 10. Zu diesem Zweck sind die Gründungspfähle 10 nur so weit in den Meeresboden eingerammt, dass kurze obere Endbereiche 22 der Gründungspfähle 10 aus dem Meeresboden herausragen, also frei nach oben vorstehen. Auf diese freien Endbereiche 22 der Gründungspfähle 10 wird die Gitterstruktur mit den Fußknotenteilen 20 aufgesetzt.

Zur Verbindung der Fußknotenteile 20 mit den freien oberen Endbereichen 22 der Gründungspfähle 10 weisen die Fußknotenteile 20 unten offene Aufnahmen 23 auf. Die Aufnahmen 23 sind in die Fußknotenteile 20 integriert, befinden sich nämlich im Inneren derselben. Jedes Fußknotenteil 20 verfügt über eine einzige Aufnahme 23 im Endbereich 22 eines Gründungspfahls 10. Alle Fußknotenteile 20 der Gitterstruktur, insbesondere alle Aufnahmen 23, sind bevorzugt gleich ausgebildet. In die Aufnahmen 23 werden zur Ankopplung der Gründungsstruktur an die Gründungspfähle 10 die oberen freiliegenden Endbereiche 22 der Gründungspfähle 10 hineingesteckt. Dadurch greift mindestens ein Teil des Endbereichs 22 jedes Gründungspfahls 10 in eine Aufnahme 23 unten im Fußknotenteil 20 ein.

Zum Herstellen der Verbindungen der Gründungspfähle 10 mit der Gitterstruktur werden zunächst die Fußknotenteile 20 mit den Aufnahmen 23 auf die Gründungspfähle 23 aufgesetzt bzw. die Endbereiche 22 der Gründungspfähle 10 in die Aufnahmen 23 eingeführt. Anschließend wird zur dauerhaften Verbindung der Gründungspfähle 10 mit den Fußknotenteilen 20 ein Grout-Material 24, wie beispielsweise im Wasser aushärtender Beton oder eine andere geeignete unter Wasser aushärtende Maße, in die Aufnahmen 23 der Fußknotenteile 20 eingeleitet. Das Grout-Material 24 füllt dabei Freiräume zwischen der jeweiligen Aufnahme 23 und dem Endbereich 22 des jeweiligen Gründungspfahls 10 aus. Es kommt so eine lückenlose, feste Verbindung der Gitterstruktur, nämlich der Fußknotenteile 20 derselben, mit den Gründungspfählen 10 zustande.

Die Fußknotenteile sind aus einem schweißbaren Metall gegossen. Beispielsweise bestehen die Fußknotenteile 20 aus Stahlguss. Dadurch lassen sich die Fußknotenteile 20 leicht als einstückige Standardbauteile, die auch als ψ-Gussknoten bezeichnet werden können, herstellen, an die die Rohre 17 und 18 zur Bildung der Säulen 12 und der Streben 13 angeschweißt werden können. Die Fußknotenteile 20 sind als Hohlkörper gegossen, und zwar mit entsprechend dicken Wänden 25. Die Dicke der Wände 25 der Fußknotenteile 20 kann sich im Verlauf derselben ändern.

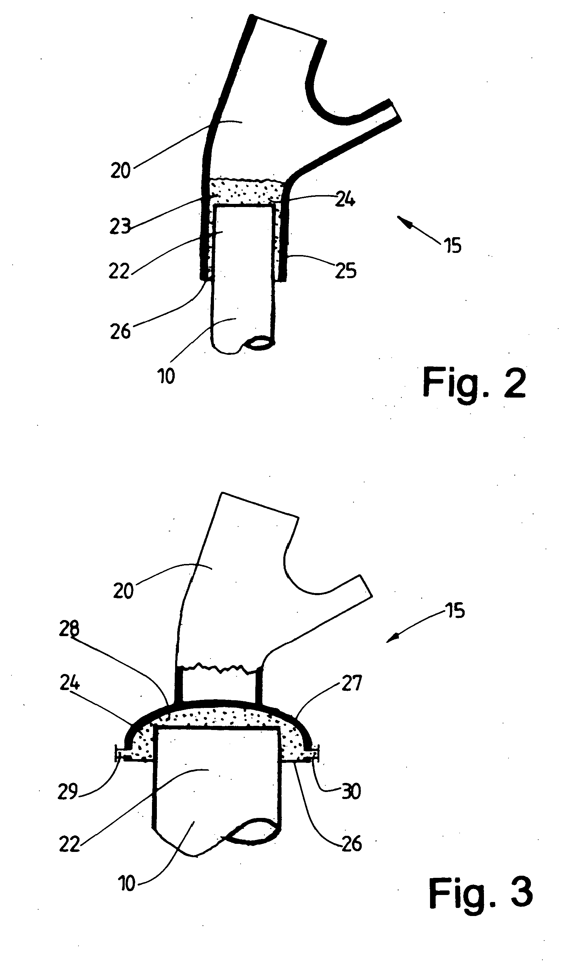

Die Fig. 2 bis 4 zeigen drei verschiedene erfindungsgemäße Ausgestaltungsmöglichkeiten der Fußknotenteile 20.

Das in der Fig. 2 gezeigte Fußknotenteil 20 ist einstückig gegossen, und zwar vorzugsweise vollständig als Hohlkörper. Der Durchmesser und die Wandstärke eines unteren Abschnitts des Fußknotenteils 20 mit einer vorzugsweise in einer horizontalen Ebene liegenden Stirnfläche 26 sind so bemessen, dass die ringförmige Stirnfläche 26 einen Innendurchmesser aufweist, der größer ist als der Außendurchmesser des Endbereichs 22 eines Gründungspfahls 10. Dadurch bildet der von der Stirnfläche 26 ausgehende hohle Endbereich des Fußknotenteils 20 die Aufnahme 23 für mindestens einen Teil des aus dem Meeresboden herausragenden oberen Endbereichs 22 des jeweiligen Gründungspfahls 10.

Weil der Innendurchmesser des die Aufnahme 23 bildenden bzw. aufweisenden unteren Abschnitts des Fußknotenteils 20 größer ist als der Endbereich 22 des jeweiligen Gründungspfahls 10, hat der in die Aufnahme 23 eingeführte Endbereich 22 Spiel in der Aufnahme 23. Dieses Spiel ermöglicht es, Positionierungsungenauigkeiten beim Einrammen der Gründungspfähle 10 in den Meeresboden auszugleichen, wenn die Gründungspfähle 10 nicht exakt dem Raster der Fußknotenteile 20, insbesondere den Aufnahmen 23 in derselben, entspricht. Der durch dieses Spiel entstandene Freiraum in der Aufnahme 23 wird nach dem Aufsetzen der Gründungsstruktur auf die Gründungspfähle 10 ausgegossen durch das Grout-Material 24. Nach dem Aushärten desselben kommt eine dauerhafte Verbindung der als Gründungsstruktur dienenden Gitterstruktur mit den Gründungspfählen 10 zustande.

Die Fig. 3 zeigt ebenfalls ein einstückig gegossenes Fußknotenteil 20, ein sogenanntes ψ-Gussknotenteil, das sich vom Fußknotenteil 20 dadurch unterscheidet, dass ein mit dem oberen Endbereich 22 eines Gründungspfahls 10 zu verbindender oder auch auf dem Meeresboden aufstehender Endbereich des Fußknotenteils 20 mit einem Klöpperboden 27 versehen ist. Dabei handelt es sich um einen vergrößerten Fuß am unteren Ende des Fußknotenteils 20. Der einstückig an das Fußknotenteil 20 angegossene Klöpperboden 27 ermöglicht wegen seines vergrößerten Außendurchmessers eine größere Aufnahme 28 als beim Fußknotenteil 20 der Fig. 2. Eine solche größere Aufnahme 28 ermöglicht das Einsetzen eines oberen Endbereichs 22 stabilerer, insbesondere im Durchmesser größerer, Gründungspfähle 10. Der größere Klöpperboden 27 am unteren Ende des Fußknotenteils 20 ermöglicht außerdem eine günstige Krafteinleitung von den Gründungspfählen 10 in die Gitterstruktur bzw. umgekehrt.

Auch beim Ausführungsbeispiel der Fig. 3 ist die Aufnahme 28 größer als der obere Endbereich 22 des jeweiligen Gründungspfahls 10, insbesondere im Durchmesser. Der zwischen dem Endbereich 22 des Gründungspfahls 10 und den Wandungen der Aufnahme 28 entstehende Freiraum wird wiederum durch Grout-Material 24 ausgegossen, das nach dem Aushärten eine stabile Verbindung der Gründungspfähle 10 mit der Gitterstruktur herbeiführt.

Damit das Grout-Material 24 beim Einleiten in die Aufnahmen 23 der Fußknotenteile 20 nicht von oben in die Gründungspfähle 10 läuft, ist vorgesehen, die oberen Endbereiche 22 der Gründungspfähle 10 zu verschließen, beispielsweise durch aufgeschweißte Platten. Dadurch bildet sich eine geschlossene Fläche aus Grout-Material 24 zwischen der oberen Stirnseite des Gründungspfahls 10 und der Oberseite der Aufnahmen 28 in Klöpperboden 27.

Des Weiteren ist vorgesehen, dass die Fußknotenteile 20 im Bereich der Klöppböden 27 eine Öffnung 29 zum Einleiten des Grout-Materials 24 in die Aufnahme 28 und eine Entlüftungsöffnung 30 zur Abfuhr des beim Einleiten des Grout-Materials 24 aus der Aufnahme 28 verdrängten Wassers oder auch Luft aufweisen. Bevorzugt sind sowohl die Öffnung 29 als auch die Entlüftungsöffnung 30 mit Ventilen versehen, wodurch die Öffnung 29 und/oder die Entlüftungsöffnungen 30 nach dem Einfüllen des Grout-Materials 24 absperrbar sind. Durch Schließen der Entlüftungsöffnungen 30 kann das Grout-Material 24 nach dem Entfernen von Luft und/oder Wasser aus den Aufnahmen 28 auch unter Druck gesetzt werden.

Die Öffnungen 29 und/oder Entlüftungsöffnungen 30 können auch beim Ausführungsbeispiel der Fig. 2 vorhanden sein.

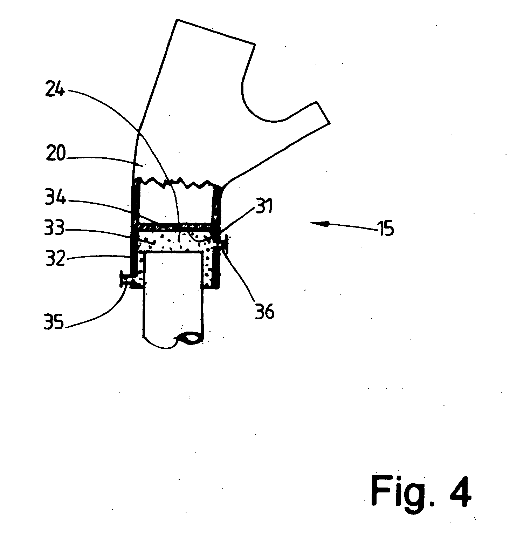

Beim Ausführungsbeispiel der Fig. 4 ist unter einer unteren Stirnfläche 31 jedes Fußknotenteils 20 ein Verlängerungsrohr 32 angeschweißt. Das Verlängerungsrohr 32 dient zur Bildung einer Aufnahme 33 für den oberen Endbereich 22 eines Gründungspfahls 10. Im gezeigten Ausführungsbeispiel korrespondiert der Außendurchmesser des Verlängerungsrohrs 32 mit dem Außendurchmesser der Stirnfläche 31 an der Unterseite des Fußknotenteils 20. Die Wandstärken des Fußknotenteils 20 einerseits und des Verlängerungsrohrs 32 andererseits können gleich sein, aber auch voneinander abweichen, so dass die Innendurchmesser gegebenenfalls ungleich sind. Im gezeigten Ausführungsbeispiel verfügt das Verlängerungsrohr 32 über einen etwas größeren Innendurchmesser als das Fußbodenteil 20 im Bereich der Stirnfläche 31. Denkbar ist es auch, dass Verlängerungsrohr 32 mit einem größeren Durchmesser als die Stirnfläche 31 des Fußknotenteils 20 auszubilden, wenn im Durchmesser größere Gründungspfähle 10 vorhanden sind. Dann kann es zweckmäßig sein, die obere Stirnseite des Verlängerungsrohrs 32 mit einer Deckwandung zu versehen, womit das im Durchmesser größere Verlängerungsrohr 32 mit der Stirnfläche 31 des Fußknotenteils 20 verschweißt wird, die in diesem Falle offen sein kann.

Im gezeigten Ausführungsbeispiel, bei dem das Verlängerungsrohr 32 etwa im Querschnitt der Stirnfläche 31 am unteren Ende des Fußknotenteils 20 entspricht, ist vorgesehen, die untere Stirnfläche 31 des Fußknotenteils 20 geschlossen auszubilden, indem eine Bodenwandung 34 an das untere Ende des Fußknotenteils 20 angegossen ist. Hierdurch wird verhindert, dass Grout-Material 24, insbesondere wenn es unter Druck in die Aufnahme 33 gepresst wird, nach oben in das Fußknotenteil 20 entweicht. Auch die obere Stirnfläche des Verlängerungsrohrs 32 kann dann offen sein.

Beim Ausführungsbeispiel der Fig. 4 sind auch eine Öffnung 35 und eine Entlüftungsöffnung 36 vorgesehen. Die Öffnung 35 befindet sich am unteren Ende des Verlängerungsrohrs 32, während die Entlüftungsöffnung 36 darüberliegend im Bereich des oberen Endes des Verlängerungsrohrs 32 angeordnet ist. Die Öffnung 35 und die Entlüftungsöffnung 36 können mit Ventilen versehen sein. Die Öffnung 25 dient auch hier zur Einleitung von Grout-Material 24 in die Aufnahme 33, wobei durch die Entlüftungsöffnung 36 Luft und/oder Wasser beim Einleiten des Grout-Materials 24 entweichen können. Wenn das Grout-Material 24 alles Wasser und die gesamte Luft aus der Aufnahme 33 verdrängt hat, kann die Entlüftungsöffnung 36 geschlossen werden. Durch weiteres Einleiten von Grout-Material 24 durch die Öffnung 35 kann so mit dem Grout-Material 24 ein Druck in dem Freiraum der Aufnahme 33 aufgebaut werden, um Luftanschlüsse im Grout-Material 24 zu beseitigen, so dass der von den in die Aufnahme 33 hineinragenden Endbereich 22 des jeweiligen Gründungspfahls 10 freigelassene Raum in der Aufnahme 33 lückenlos vom Grout-Material 24 ausgefüllt wird.

### Bezugszeichenliste:

- 10: Gründungspfahl
- 11: Übergangsstück
- 12: Säule
- 13: Strebe
- 14: Knotenpunkt
- 15: Fußknotenpunkt
- 16: Knotenpunkt
- 17: Rohr
- 18: Rohr
- 19: Knotenteil
- 20: Fußknotenteil
- 21: Knotenteil
- 22: Endbereich
- 23: Aufnahme
- 24: Grout-Material
- 25: Wand
- 26: Stirnfläche
- 27: Klöpperboden
- 28: Aufnahme
- 29: Öffnung
- 30: Entlüftungsöffnung
- 31: Stirnfläche
- 32: Verlängerungsrohr
- 33: Aufnahme
- 34: Bodenwandung
- 35: Öffnung
- 36: Entlüftungsöffnung

## Patentansprüche

1. Gitterstruktur eines Offshore-Bauwerks, insbesondere einer Offshore-Windenergieanlage, mit miteinander an Knotenpunkten (14, 15, 16) verbundenen Säulen (12) und Streben (13), **dadurch gekennzeichnet, dass** die Knotenpunkte (15) an den unteren Enden der Säulen (12) als Fußknotenteile (20) ausgebildet sind.

2. Gitterstruktur nach Anspruch 1, **dadurch gekennzeichnet, dass** die Fußknotenteile (20) aus einem schweißbaren Metall, insbesondere Stahlguss, gegossen sind.

3. Gitterstruktur nach Anspruch 1 oder 2, **dadurch gekennzeichnet, dass** die Fußknotenteile (20) mindestens teilweise hohl ausgebildet sind und vorzugsweise einen zumindest teilweise runden Querschnitt aufweisen.

4. Gitterstruktur nach einem der Ansprüche 1 bis 3, **dadurch gekennzeichnet, dass** die Fußknotenteile (20) mindestens eine Fügefläche zum Anschweißen eines Rohres (17, 18) aufweisen, wobei die Fügefläche vorzugsweise einen mit dem jeweiligen Rohr (17, 18) korrespondierenden Querschnitt aufweist, wobei vorzugsweise mindestens eine Fügefläche insbesondere rund und/oder ringförmig ausgebildet ist.

5. Gitterstruktur nach Anspruch 4, **dadurch gekennzeichnet, dass** die Fußknotenteile (20) als Gussknoten ausgebildet sind mit mehreren mindestens zum Teil unterschiedlich gerichteten Fügeflächen.

6. Gitterstruktur nach einem der Ansprüche 1 bis 5, **dadurch gekennzeichnet, dass** die Fußknotenteile (20), vorzugsweise untere Fußbereiche derselben, unten offene Aufnahmen (23, 28, 33) für obere Endbereiche (22) der Gründungspfähle (10) aufweisen.

7. Gitterstruktur nach Anspruch 6, **dadurch gekennzeichnet, dass** die Fußknotenteile (20) im Bereich der Aufnahmen (28) einen größeren Querschnitt als im übrigen Teil aufweisen, insbesondere die unteren Füße der Fußknotenteile (20) nach Art eines Klöpperbodens ausgebildet sind.

8. Gitterstruktur nach einem der Ansprüche 1 bis 5, **dadurch gekennzeichnet, dass** unter die Fußknotenteile (20) Verlängerungsrohre (32) geschweißt sind, die eine Aufnahme (33) für einen oberen Teil eines jeweiligen Gründungspfahls (20) aufweisen.

9. Gitterstruktur nach einem der Ansprüche 6 bis 8, **dadurch gekennzeichnet, dass** die unten offenen Aufnahmen (23, 28, 33) einen geringfügig größeren Querschnitt als die in die Aufnahmen (23, 28, 33) eintauchende obere Endbereiche (22) der Gründungspfähle (10) aufweisen.

10. Gitterstruktur nach einem der Ansprüche 6 bis 9, **dadurch gekennzeichnet, dass** die Aufnahmen (28, 33) mindestens eine Öffnung (29, 35), insbesondere verschließbare Öffnung (29, 35), zum Einleiten eines fließfähigen Verbindungsmaterials, insbesondere eines Grout-Materials (24) aufweisen.
